# EUROPEAN PATENT APPLICATION

(11) **EP 2 830 078 A1**
(43) Date of publication of application: **28.01.2015**
(21) Application number: 13003743.5
(22) Date of filing: 26.07.2013
(51) Int. Cl.: H01H 33/668

(54) **Method to determine the pressure inside of a vacuum interrupter, and vacuum interrupter itself**

(71) Applicant: ABB Technology AG, 8050 Zürich (CH)
(72) Inventor: Gentsch, Dietmar, 40882 Ratingen (DE); Hencken, Kai, 79539 Lörrach (DE)
(74) Representative: Schmidt, Karl Michael

(57) **Abstract**

The invention relates to a method to determine the pressure inside of a vacuum interrupter for medium or high voltage use, wherein at least one fixed contact piece and at least one movable contact piece are arranged inside the technical vacuum of a vacuum interrupter, and wherein the contact pieces are electrically connected to external electrical fixation points, according to the preamble of claim 1 and 5.

In order to to implement a high accuracy pressure sensoring in the rough conditions inside a vacuum interrupter, without additional means internally to the vacuum interrupter, the external electrical fixation points are connected with an external electrical energy source, and that in the disconnected or open position of the vacuum interrupter, the effect of a cold cathode vacuum gauge will be used, in that the leakage current between the open contacts generates an x-ray induced ionization of the restgas inside the vaccum interrupter, and that the resulting current is measured with high resolution, in order to determine by this current the restgas pressure inside the vacuum interrupter.

## Description

The invention relates to a method to determine the pressure inside of a vacuum interrupter for medium or high voltage use, and a vacuum interrupter arrangement itself, wherein at least one fixed contact piece and at least one movable contact piece are arranged inside the technical vacuum of a vacuum interrupter, wherein an axial and mostly homogenous magnetic field is applied in a way that it covers the relevant volume inside the vacuum interrupter and wherein the contact pieces are electrically connected to external electrical fixation points, according to the preamble of claims 1 and 5.

Vacuum interrupters require a vacuum pressure below at least 10⁻¹ Pa in order to interrupt successfully a high current. Therefore the vacuum pressure needs to be guaranteed throughout their lifetime, which is typically more than 20 years. There have been some discussion regarding this in the recent years. The measurement of the residual gas pressure is a diagnostics method, which is increasing in importance in the future. On the one hand this is due to a relevant fraction of the installed base now reaching the end of guaranteed lifetime. In addition the vacuum interrupter technology is expected to be used in new areas, where a monitoring of the vacuum status is likely to be required.

Also pressure measurement means for vacuum are well known. But the implementation of pressure sensors inside vacuum interrupters is not easily applicable. Common vacuum measurement equipment cannot be integrated easily within the closed VI bottle, also they often lead to a reduction of the reliability of the overall system. In addition the conditions within the bottle either during production or during operation (e.g. during the interruption of a short circuit) are rather destructive for known pressure sensors.
In addition vacuum interrupters which are already in operation are not equipped with any vacuum measurement sensors. Therefore the assessment of their vacuum status can only be done by using externally applied means.
A common method to investigate the vacuum status at the low pressures found after production (10^-6 Pa) is currently the so-called "magnetron" or "inverse magnetron" principle. This is an application of a common cold-cathode pressure gauge measurement principle, but with the difference, that the bottle including the two electrodes and/or the shield is used as the measurement system. Whereas this system is used in a number of applications, especially during quality control in production, as well as in service, there are still difficulties in certain applications.

So it is the object of the invention, to improve the highly accurate pressure sensoring based on the magnetron measurement approach inside a vacuum interrupter.

The invention is, that in addition to the external electrical fixation points connected with an external electrical high voltage source, together with an externally produced homogenous magnetic field and the vacuum interrupter inthe disconnected or open position, that means the opened contact position, the effect of a cold cathode vacuum gauge will be used, in that the initiation of the discharge current between the open contacts is generated by an external x-ray source, which induced inside the vaccum interrupter seed electrons, which then lead to a much larger current through collisions with the residual gas and that the resulting discharge current is measured, in order to determine by this current the restgas pressure inside the vacuum interrupter.

For that, an external x-ray-source near to a vacuum interrupter is positioned in order to enhance the described effect of generating seed electron, in a predetermined way. The main operation principle of the magnetron gauge can be described in the following way: The combined effect of the magnetic and electric field is to form a "trap", which has the possibility to capture the electrons for a very long time, avoiding any loss due to collisions with some boundary. Due to this long path inside the bottle by some "circulating paths", the distance traveled becomes comparable to the mean-free path in the residual gas. This means that after some time, the electrons will eventually collide with an atom from the residual gas. In such an ionization collision the electron will generate an additional electron and an ion. While the ion will be collected by the cathode, the new electrons will also be captured in the trap until it is eventually removed from it by further collision. In this way a measurable current generated from the interaction with the residual gas is generated. From this description it is obvious that the current will be related to the number of ionization collisions and therefore to the density (pressure) of the residual gas.
So in consequence, the restgascollisions and the resulting further electron emission can be quantitatively used for determining the rest gas pressure.

The only requirement for using the vacuum interrupter as a cold cathode vacuum gauge is, to have means for applying an axial magnetic field inside the vacuum interrupter and the possibility to apply a high voltate (typically between 1-10kV) to either two contacts or to a contact and a shield and means for determining very small current signals, for registration of this effect. But the important benefit out of that is, that the pressure inside a vacuum interrupter can be determined very easy.

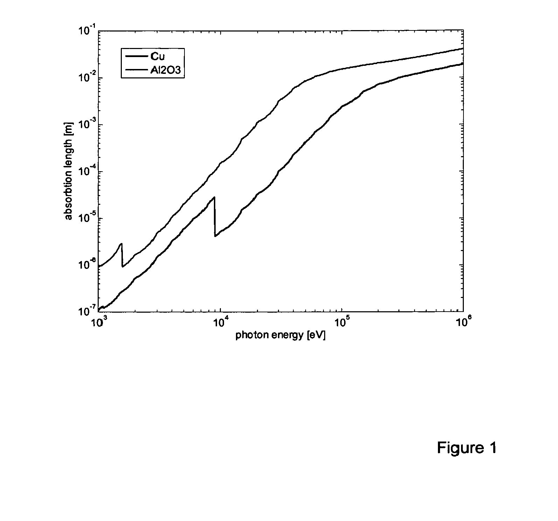

Already a number of techniques have been proposed for pressure measuring. The most often used one is the "magnetron principle" like described above. This method requires the application of an external axial magnetic field and a high voltage either between the two contacts or between the contacts and the shield. It also requires the initiation of the magnetron current. This can be done either by seed electrons produced by cosmic radiation or being provided by an initial field emission current. The basic principle is shown in the figure 1.

In order for this magnetron discharge to start, an initial "seed electron" is needed, which then leads to an avalanche of additional ionization processes until a macroscopic current is flowing through the vacuum interrupter. The initiation of the magnetron current by a seed electron is often difficult to achieve, especially at low pressures. Even commercial magnetron gauges, so-called cold-cathode magnetron gauges, often need seconds to minutes to start up. As they are build as traps, that is, the electrons are kept confined, the current remains continuously flowing after this initiation stage. This can similarly be used in the magnetron measurement principles for vacuum interrupters. Here one doesn't have a "perfect trap" configuration of the electric field, but still some electrons are kept within the vacuum volumeTherefore a magnetron-like measurement in vacuum interrupters typically produces more complex current patterns. In addition the vacuum interrupter is a restricted vacuum volume. The discharge itself will lead to a cleaning or "pumping" of the residual gas. That is the residual gas is removed by the discharge. Therefore the current distribution is not constant but often with a short pulse at the beginning and a smaller continuous current afterwards. The maximum of this current pulse is typically used as the measured current.
Due to the random production of the initial seed electron the starting time to initiate this current is statistical distributed. This leads to uncertainties in the vacuum measurement or doesn't allow the application of the measurement principle at all.

In order to reduce the startup time often a very large (-10kV) high voltage is applied. This has the effect, that seed electrons are generated from field emission from one of the electrodes or the shield, which then serves as a cathode. A disadvantage of this method is, that the large voltage cannot be chosen according to the optimal operation of the magnetron, for example, in order to reduce the pumping effect.

The invention therefore solves the problem of initiation of the magnetron current by producing seed electrons in the vacuum interrupter interior using an x-ray radiation source.

The low particle density of the residual gas in the vacuum interrupter under normal operational conditions doesn't allow for an ionization process to take place directly in its interior vacuum volume.
But one has to keep in mind, that a large amount of electrons is produced inside the solid material surrounding the vacuum volume. Most of these electrons are absorbed by this material, but electrons that are produced close to the surface have a probability to escape the solid material and enter the vacuum volume. These are then the seed electrons, we are looking for.

So important for that invention is, that the leakage current is not initiated by sheer chance for example by environmental radiation, but in a reproductive way, using a determined x-ray source, in order to use the effect in a reproductive and precise way.

The basical effect for the use in the invention is as follows

At energies above a few 10^{th} of kV x-ray radiation is absorbed to a lesser degree by material, as this energy is above the K-line for most light and medium heavy elements. Therefore a x-ray photon with this energy has a significant probability to cross the solid material outside the vacuum interrupters, that is either the ceramics and or the shield of a "naked" vacuum interrupters or even the material of the pole in the case of an embedded vacuum interrupter (most often either epoxy or thermoplastics). The absorption lengths of Cu and Al2O3 as typical materials found in the vacuum interrupter bottle design, are shown below. For example a 100kV x-ray has an absorption length of more than 1 mm for Cu and more than 1 cm for aluminumoxide.

### See figure 1.

The x-ray radiation will produce electrons throughout the solid material. Seed electrons will be produced by those x-ray photons, that release electrons in a small range close to the surface of any material. Typically values are that electrons produced within a few 10^{th} of nm have a significant probability to be released. This depends strongly on the electron energy, given here for electrons in the keV range, which are the most relevant ones for the purpose of initiating the magnetron discharge.
If the x-ray energy is too large, the aborption length will be larger than the material in question. Under these conditions the number of electrons produced will be low. It can be shown, that under rather general circumstances the optimal x-ray energy is the one, where the absorption length is about the same as the material thickness. This gives us an energy range above 40keV and below 1 MeV to be best suited for our application. Based on these number, we can make a rough estimate about the number of seed electrons produced per initial photon. Assuming an electron yield of one per initial photon, one estimates that roughly one electron is produced for about 1 million initial photons. Therefore the strength of the x-ray radiation needs to be strong enough to produce at least several millions of x-ray photons.

There exists nowadays x-ray sources, that produce the x-ray radiation as short pulses, below 100nm. These are mostly used for material inspection. The pulsed sources are an advantage for our application, as the dose can be very high for only a short time, which is then used to start the magnetron discharge of the vacuum interrupter at a prescribed time, but doesn't influence it afterwards. Alternatively one could use a continuous source in order to reduce (only) the time needed to start the discharge, which allows for a lower dose but with the disadvantage of having no control over the starting time per se.
As the seed electrons are now produced not by the field emission and therefore independently of the level of the high voltage applied, one can select voltage level applied to the vacuum interrupter based on the suitable discharge currents and does not need to select a high enough value to release enough field emission current, which is a problem with some geometries.

By applying in addition an axial magnetic field and a high voltage to either the contact and the shield or to the two contacts, a magnetron discharge is produced and the current shape is measured. Some values of this current, especially the maximum, is measured and used to infer the vacuum inside the VI.

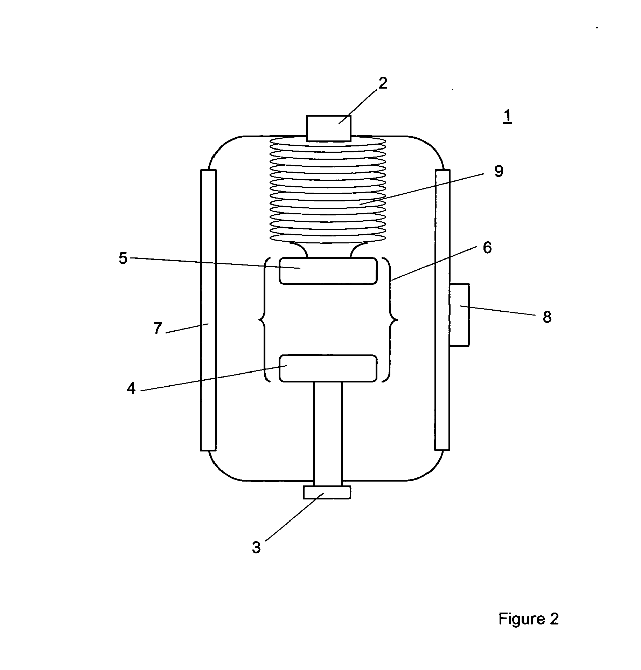

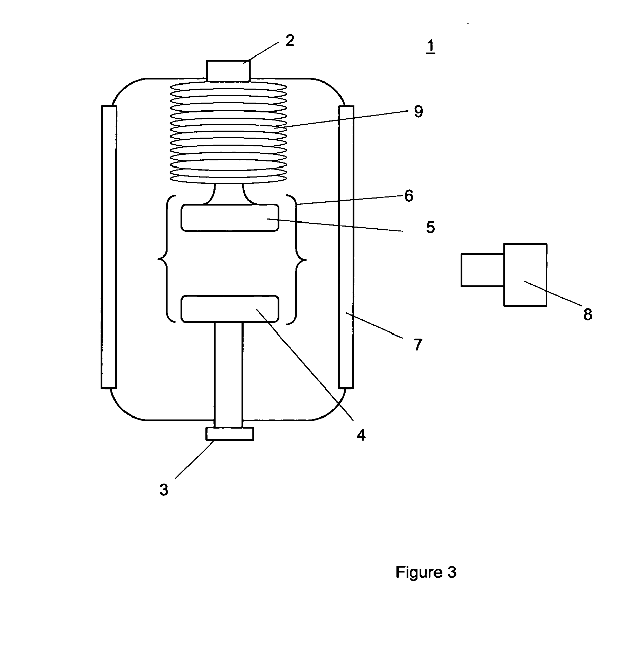

Figure 2 shows a first placement of the x-ray source The best geometric placement for that is in line with the two contacts
The upper contact 5 is the moving contact, which is fixed on a bellow and electrically connected to the upper connection point 2.
The lower fixed contact 4 is connected with the connection point 3.
Like it already said, in this alternative, the x-ray source is fixed externally to the vacuum interrupter 1.

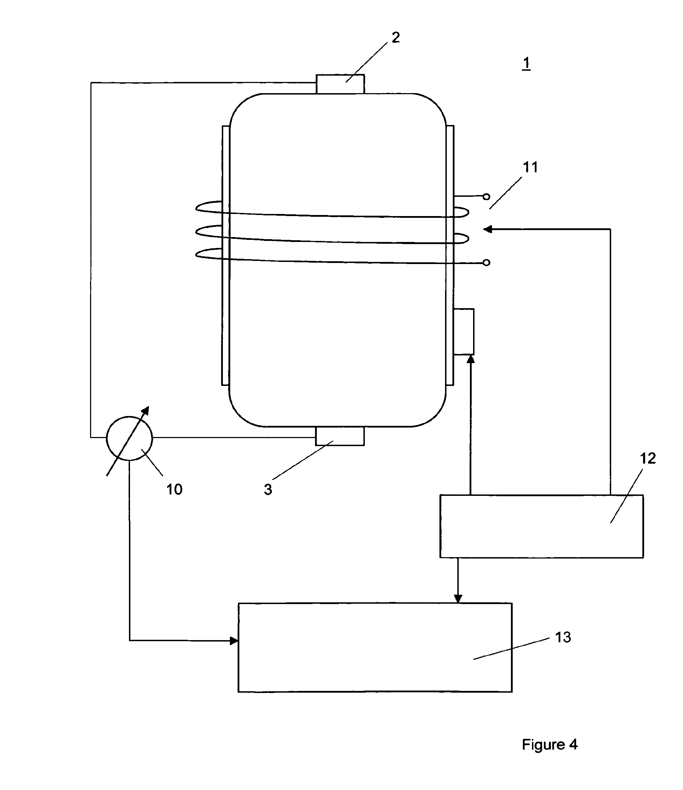

Additionally to both alternatives a magnetic field source must! be arranged close to the vacuum interrupter, like shown in figure 4.

So if the contacts are opened, a coincidence unit 12 generates a magnetic field by at least a current pulse, which is generated coincidently to the x-ray source generatioin signal.
The resulting current to that coincident impact is measured between the connection points 2 and 3 of the opened contacts 4 and 5. In a pressure determination unit 13, the concerning actual rest gas pressure inside the vacuum interrupter can be determined.

### Position numbers

- 1: Vacuum interrupter
- 2: External connection point to moving contact
- 3: External connection point to fixed contact
- 4: Fixed contact
- 5: Moving contact
- 6: Shielding
- 7: Ceramic body
- 8: X-ray source
- 9: Bellow
- 10: Current measuring device
- 11: Magnetic field generator
- 12: Koincidence unit
- 13: Pressure determination

## Claims

1. Method to determine the pressure inside of a vacuum interrupter for medium or high voltage use, wherein at least one fixed contact piece and at least one movable contact piece are arranged inside the technical vacuum of a vacuum interrupter, and wherein the contact pieces are electrically connected to external electrical fixation points
**characterized in,**
**that** the external electrical fixation points are connected with an external electrical energy source, and that in the disconnected or open position of the vacuum interrupter, the effect of a cold cathode vacuum gauge will be used, in that the electrons of a leakage current between the open contacts potential difference generates and/or electrons seeded by x-ray induced ionization of material on the surface inside the vaccum interrupter cause a resulting current, which is measured with high resolution, in order to determine by this current the restgas pressure inside the vacuum interrupter.

2. Method according to claim 1,
**characterized in,**
**that** an external x-ray source is applied near to the vacuum interrupter.

3. Vacuum interrupter for medium or high voltage use, wherein at least one fixed contact piece and at least one movable contact piece are arranged inside the technical vacuum of a vacuum interrupter, and wherein the contact pieces are electrically connected to external electrical fixation points,
**characterized in**
**that** the vacuum interrupter is applied with an internal or an external or internal x-ray-source, and additionally applied with an internal or external magnetic field element or magnetic field generating means, and that the discharge current measured by current measuring means during x-ray and or magnetic field exposition is used for determining the rest gas pressure in the vacuum interrupter in calculation means.

4. Vacuum interrupter, according to claim 3,
**characterized in that,**
a coincidence unit is used, in order to generates the signals for the X-ray source and/or the magnetic field generator and/or the high voltage source in a timely coincidental way.

5. Vacuum interrupter, according to claim 3 or 4,
**characterized in that,**
a determination unit is used, for determine a pressure out of the current signal between both electrical connections points of the vacuum interrupter.
